Europäisches Patentamt

(19) **European Patent Office**

**Office européen des brevets**

(11) Publication number: **0 073 647**
**A2**

(12) # EUROPEAN PATENT APPLICATION

(21) Application number: **82304484.7**

(22) Date of filing: **25.08.82**

(51) Int. Cl.³: **G 06 K 21/00**

(30) Priority: **28.08.81 GB 8126333**

(43) Date of publication of application: **09.03.83**
**Bulletin 83/10**

(84) Designated Contracting States: **AT BE CH DE FR GB IT LI LU NL SE**

(71) Applicant: **Technology and Innovations Exchange Limited, 13/14 Golden Square, London W1R 3AG (GB)**

(72) Inventor: **Nuttall, Christopher G.F., 12 Ormonde Gate P.O. Box 242, London SW3 4EY (GB)**

(74) Representative: **Hartley, David et al, 4 Dyer's Buildings Holborn, London EC1N 2JT (GB)**

(54) **Data selection and decoding system.**

(57) A data selection and decoding system useful for selective analysis and speedy assimilation of a large volume of data, in which the data, is set out as an array of code characters. A decoder mask is used to read data from the array, the mask having a viewing slot for viewing a chosen line and bearing, alongside the slot, decoding keys. The mask is made up of sheet portions, each with a viewing slot and possibly bearing decoding keys on each side. By folding the mask so as to reveal the sheet portion or the side of a sheet portion appropriate to a chosen row or column, characters, visible through the slot, can be quickly decoded.

## "DATA SELECTION AND DECODING SYSTEM"

This invention relates to a decoder mask for use in a data selection and decoding system which has particular application in searching for a combination of features in coded data.

When it is necessary to search a large amount of data for a particular item, a common approach is to program a computer to scan the data and to select portions of the data containing a predetermined combination of features. Such a technique has been employed in, for example, searching for publications relating to a particular subject by scanning the text of many publications and searching for particular key words selected beforehand as being relevant to the required subject. However, unlike this example, there are many situations in which the searcher does not have an absolutely clear requirement in mind and therefore cannot specify all the desirable combinations of features to enable a satisfactory computer search to be performed. Such a situation may occur when, for example, a businessman wishes to invest in a particular organisation or product. Conventionally, the various features of each organisation or product, for example, the potential sales volume, selling price, etc. may be classified and written into a computer data bank, from which data having a particular combination of features may be retrieved according to an ideal model and a series of weighting factors applied to each feature of the ideal model. Thus, when a particular organisation or product registers a "score" greater than a given threshold, the relevant data is displayed to the user. This technique has the disadvantage that the user is required to specify a series of optima and weights without having a full knowledge of all combinations which might be available and which could meet his requirements. It is therefore inevitable that the computer ignores certain combinations which may be of interest but which are rejected due to the failure to meet one or two criteria, which criteria would have assumed less importance in the light of very favourable other features had the user been able to see them.

It is an object. of this invention to provide simple means whereby groups of data can be evaluated by viewing several features of a group simultaneously.

According to one aspect of this invention, we propose a decoder mask for selecting and decoding data on a reference sheet in the form of an array of code characters arranged in a plurality of lines, the decoder mask having a viewing slot for selecting a chosen line on the reference sheet, and bearing decoding keys alongside the slot at a spacing and in a sequence corresponding to the spacing and sequence of the characters in the chosen line. The said lines of characters preferably coincide with either the rows or the columns of the array.

In a preferred embodiment, the mask comprises a series of sheet portions each having a viewing slot and associated together in a stack such that the viewing slots are in alignment. The sheet portions may be associated together in the style of a book but we prefer forming the mask from a single sheet of material, which may be any suitable material (for example, paper, card or plastics material). In each case, however, the sheet portions are displaceable to reveal a sheet portion or one side of a sheet portion, bearing decoding keys appropriate to any chosen line of characters in the array.

According to another aspect of this invention a data selection and decoding system comprises a reference sheet bearing an array of code characters arranged in a plurality of lines, the characters in each line being arranged at a predetermined spacing and in a predetermined sequence, and a decoding mask according to the said one aspect of this invention.

The invention enables coded information to be quickly selected and

reviewed by moving the mask to expose the chosen
line and matching the decoding keys to the
characters in the line. This enables various
features relating to an item of potential interest to
be quickly retrieved and evaluated simultaneously,
so that the user can rapidly decide whether the item
is to be investigated in more detail, or discarded,
the mask then being moved to another line of
characters. The system has particular application
in the evaluation and choice of products and services,
as in the example described above, and may also be
applied in such fields as house purchasing. In each
case the coded characters indicate the presence or
absence of certain features, or the size of certain
variables. Since the user is able to see several of
these features or variables simultaneously, he is
free to alter his search criteria according to the
overall picture revealed. In other words, the
system allows feedback in the search process.

A preferred embodiment of the invention will
now be described by way of example in the
accompanying drawings in which:-

Fig. 1 is a perspective view of a decoder mask;

Fig. 2 is a plan view of the mask in position
over a reference sheet bearing an array of code
characters; and

Fig. 3 is a plan view of a portion of the
reference sheet.

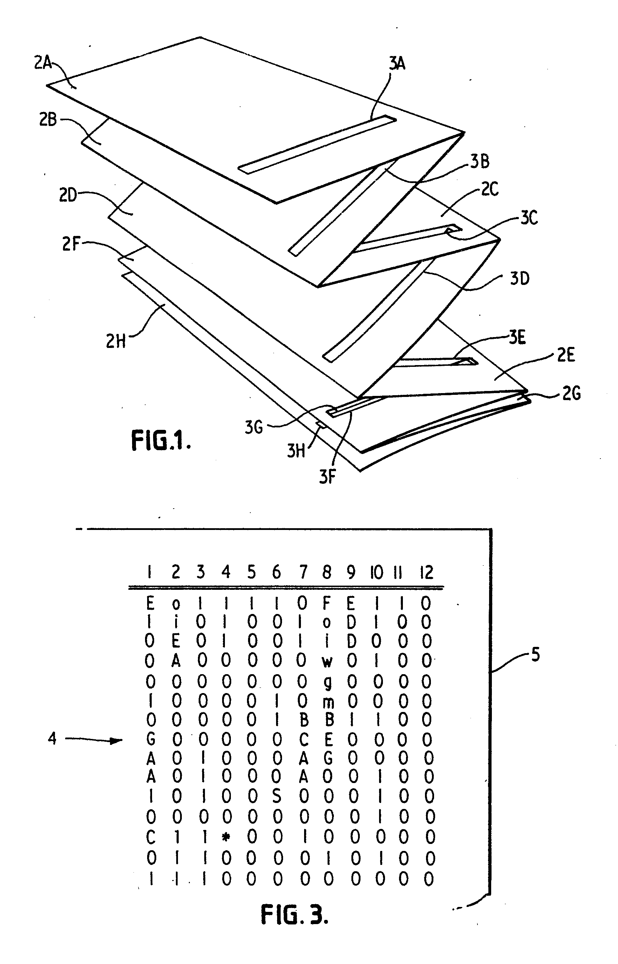

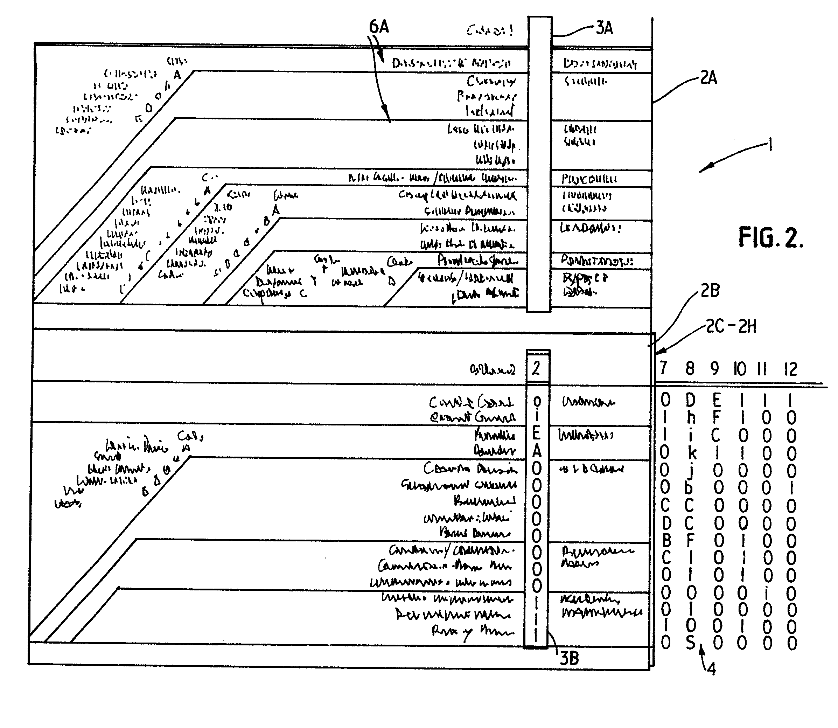

In its preferred form the decoder mask 1 comprises a slotted sheet of paper or card which is folded several times in concertina fashion as shown in Fig. 1. The mask 1 thus comprises a series of sheet portions 2A to 2H each having a slot 3A or 3B etc. for selecting and viewing a chosen column in an array of coded characters 4 (see Figs. 2 and 3). The slots 3A to 3H are positioned in registry with each other so that the coded characters on the reference sheet 5 are visible through the mask 1 when folded.

In this embodiment of the invention, the system provides a means of evaluating new inventions and products. The data in each array 4 relates to one new product. The characters in the first column (column 1) relate to fifteen important parameters of the new product and are decoded using the reverse side of sheet portion 2A which bears a series of printed decoding keys 6A arranged alongside the slot 3A at a spacing corresponding to the spacing of the characters on the reference sheet. In a similar manner, the second column of the array 4 is decoded using sheet portion 2B as shown in Fig. 2. It will be seen that the column of characters is visible through seven sheet portions 2C to 2H.

Figure 2 illustrates clearly the main advantage of the invention over, for example, computer search systems. With the decoder mask 1 in position over a line of characters, several features of a product can be viewed and decoded simultaneously enabling the user to gain an overall impression of the product. The decision as to whether the product is or is not of interest is therefore a decision made by the user on the basis of an overall impression, rather than on the basis of a number of individual criteria assessed independently. In addition, the system makes use of the human facility to remember large quantities of data for a relatively short period of time so that subsequent lines or columns of data can be evaluated with the contents of the earlier columns in mind.

The reference sheet 5 contains several arrays 4, each relating to a different invention or product. Each array 4 contains 12 columns of characters starting with the most important on the left hand side. The user can investigate each product to a greater or lesser extent depending on the initial impression gained as the first and subsequent columns are investigated.

The system also has the advantage that it is simple and portable, which means that it is inexpensive, it is very convenient to use, and it does not require access to computer hardware.

0073647

CLAIMS:

1.    A decoder mask, for selecting and decoding data on a reference sheet in the form of an array of code characters arranged in a plurality of lines, the decoding mask having a viewing slot for selecting a chosen line on the reference sheet, and bearing decoding keys alongside the slot at a spacing and in a sequence corresponding to the spacing and sequence of characters in the chosen lines.

2.    A mask according to claim 1 comprising a series of sheet portions each having a viewing slot and associated together in a stack such that the viewing slots are in alignment, the sheet portions being displaceable to reveal a sheet portion or one side of a sheet portion bearing decoding keys appropriate to any chosen line or column of characters in the array.

3.    A mask according to claim 2 comprising a sheet of material which is folded several times concertina fashion.

4.    A mask according to claim 2 or claim 3 wherein at least some of the sheet portions bear decoding keys on each side thereof.

5.    A decoding mask for selecting and coding data constructed and arranged  substantially as hereinbefore described with

0073647

reference to and as illustrated in the accompanying drawings.

6. A data selection and decoding system comprising a reference sheet bearing an array of code characters arranged in a plurality of lines, the characters in each line being arranged at a predetermined spacing and in a predetermined sequence, and a decoder mask according to any one of the preceding claims 1 to 5.

FIG.1.

| 1 | 2 | 3 | 4 | 5 | 6 | 7 | 8 | 9 | 10 | 11 | 12 |
|---|---|---|---|---|---|---|---|---|----|----|----|
| E | o | 1 | 1 | 1 | 1 | 0 | F | E | 1  | 1  | 0  |
| 1 | i | 0 | 1 | 0 | 0 | 1 | o | D | 1  | 0  | 0  |
| 0 | i | E | 0 | 1 | 0 | 0 | i | D | 0  | 0  | 0  |
| 0 | E | A | 0 | 0 | 0 | 0 | w | 0 | 1  | 0  | 0  |
| 0 | A | 0 | 0 | 0 | 0 | 0 | g | 0 | 0  | 0  | 0  |
| 1 | 0 | 0 | 0 | 0 | 1 | 0 | m | 0 | 0  | 0  | 0  |
| 0 | 0 | 0 | 0 | 0 | 1 | B | m | B | 1  | 1  | 0  |
| G | 0 | 0 | 0 | 0 | 0 | C | E | 0 | 0  | 0  | 0  |
| A | 0 | 1 | 0 | 0 | 0 | C | A | G | 0  | 0  | 0  |
| A | 0 | 1 | 0 | 0 | 0 | A | 0 | 0 | 1  | 0  | 0  |
| 1 | 0 | 1 | 0 | 0 | S | 0 | 0 | 0 | 1  | 0  | 0  |
| 0 | 0 | 0 | 0 | 0 | 0 | 0 | 0 | 0 | 1  | 0  | 0  |
| C | 1 | 1 | * | 0 | 0 | 1 | 0 | 0 | 0  | 0  | 0  |
| 0 | 1 | 1 | 0 | 0 | 0 | 0 | 1 | 0 | 1  | 0  | 0  |
| 1 | 1 | 1 | 0 | 0 | 0 | 0 | 0 | 0 | 0  | 0  | 0  |

FIG. 3.

FIG. 2.

2A

3A

6A

2B

2C-2H

3B

4

7 8 9 10 11 12